# EUROPEAN PATENT SPECIFICATION

(11) **EP 4 059 209 B1**
(45) Date of publication and mention of the grant of the patent: **27.09.2023**
(21) Application number: 20838308.3
(22) Date of filing: 28.10.2020
(51) Int. Cl.: H04L 61/4511

(54) **METHODS, SYSTEMS, AND COMPUTER READABLE MEDIA FOR ACTIVELY DISCOVERING AND TRACKING ADDRESSES ASSOCIATED WITH 4G SERVICE ENDPOINTS**
VERFAHREN, SYSTEM UND COMPUTERLESBARES MEDIUM ZUM FINDEN UND VERFOLGEN VON ADRESSEN
PROCÉDÉ, SYTÈME ET SUPPORT DE STOCKAGE POUR DÉCOUVERTE ET TRAÇAGE D'ADRESSES

(30) Priority: 19.10.2020 US 202017074553
(43) Date of publication of application: 21.09.2022
(73) Proprietor: Oracle International Corporation, Redwood Shores, California 94065 (US)
(72) Inventor: GOEL, Yesh, Bangalore, Karnataka 560035 (IN)
(74) Representative: Gill Jennings & Every LLP
(86) International application number: PCT/US2020/057712
(87) International publication number: WO 2021/055998

(56) References cited:
- CN-A- 109 788 078
- US-A1- 2006 010 224
- US-A1- 2009 222 584
- US-A1- 2013 198 269
- CHESHIRE M KROCHMAL APPLE INC S: "Apple's DNS Long-Lived Queries protocol ;draft-sekar-dns-llq-06.txt", APPLE'S DNS LONG-LIVED QUERIES PROTOCOL ;DRAFT-SEKAR-DNS-LLQ-06.TXT ;INTERNET-DRAFT: NETWORK WORKING GROUP, INTERNET ENGINEERING TASK FORCE, IETF; STANDARDWORKINGDRAFT, INTERNET SOCIETY (ISOC) 4, RUE , no. 6 23 August 2019 (2019-08-23), pages 1-26, XP015134842, Retrieved from the Internet: URL:https://tools.ietf.org/html/draft-seka r-dns-llq-06 [retrieved on 2019-08-23]
- ABLEY ICANN W KUMARI GOOGLE J: "A Mechanism for Remote-Triggered DNS Cache Flushes (DNS FLUSH); draft-jabley-dnsop-dns-flush-00.txt", A MECHANISM FOR REMOTE-TRIGGERED DNS CACHE FLUSHES (DNS FLUSH); DRAFT-JABLEY-DNSOP-DNS-FLUSH-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 24 June 2013 (2013-06-24), pages 1-12, XP015090421,

## Description

### TECHNICAL FIELD

The subject matter described herein relates to discovering address information associated with service endpoints in a telecommunications network. More particularly, the subject matter described herein relates to methods, systems, and computer readable media for actively discovering and tracking addresses associated with 4G service endpoints.

### BACKGROUND

In telecommunications networks, a service endpoint is an address on a network node that uniquely identifies an entity that provides service to service consumers. The service endpoint can include an Internet protocol (IP) address or a combination of IP address and transport layer port number, which is also referred to as an IP endpoint.

In 5G telecommunications networks, the network node that provides service is referred to as a producer network function (NF). A network node that consumes services is referred to as a consumer NF. A network function can be both a producer NF and a consumer NF depending on whether it is consuming or providing service.

A given producer NF may have many service endpoints. Producer NFs register with a network function repository function (NRF). The NRF maintains an NF profile of available NF instances and their supported services. Consumer NFs can subscribe to receive information about producer NF instances that have registered with the NRF.

In addition to consumer NFs, another type of network node that can subscribe to receive information about NF service instances is a service communications proxy (SCP). The SCP subscribes with the NRF and obtains reachability and service profile information regarding producer NF service instances. Consumer NFs connect to the service communications proxy, and the service communications proxy load balances traffic among producer NF service instances that provide the required service or directly routes the traffic to the destined producer NF.

One problem with the existing 3GPP service architecture is that a consumer NF or an SCP may have insufficient information to load balance traffic among service endpoints exposed by a producer NF service instance. In one scenario, a producer NF may only register its FQDN at the NF service level without individually registering domain names, IP addresses, or IP endpoints of producer NF services. In another scenario, a producer NF may only register its FQDN at the NF instance level without individually registering IP addresses or IP endpoints of services or FQDNs at the NF service level.

In either of these scenarios, the consumer NF or SCP must obtain the IP addresses or IP endpoints associated with the service endpoints to contact the individual service endpoints. In general, IP addresses or IP endpoints corresponding to domain names can be determined using the domain name system (DNS). In the 5G network architecture described above, service consumers need to be notified of service endpoint IP addresses whenever an NF registers or updates its profile. Another scenario in which the consumer NF or SCP needs to be updated with the IP addresses or IP endpoints of the service is when the IP addresses or IP endpoints change without a corresponding NF profile or service update. Even though IP addresses or IP endpoints are discoverable through DNS, there is no automated process for notifying service consumers when an IP address or IP endpoint associated with a service change.

An additional problem associated with a network architecture that includes both 4G service endpoints is the inability to actively discover and maintain IP address information for 4G NFs and service endpoints associated with 4G NFs. Existing 4G service endpoint discovery procedures require that each consumer NF (4G or 5G) directly contact a DNS server to discover 4G NFs and detect changes in 4G NF status information. Requiring each consumer NF to directly communicate with DNS servers can be burdensome on the consumer NFs, as the consumer NFs must maintain timers corresponding to DNS response expiration periods and re-query a DNS server with a DNS response expiration occurs. In addition, there is currently no mechanism provided by DNS for the consumer NFs to detect when 4G NFs have scaled up, scaled down. Further, when a DNS server goes down, scales up, or scales down, each consumer NF must be reconfigured.

In light of these and other challenges, there exists a need for improved, methods, and non-transitory media to actively discover and maintain address information for 4G service endpoints.

CHESHIRE M KROCHMAL APPLE INC S, "Apple's DNS Long-Lived Queries protocol ;draft-sekar-dns-llq-06.txt", no. 6, (20190823), pages 1 - 26, APPLE'S DNS LONG-LIVED QUERIES PROTOCOL ;DRAFT-SEKAR-DNS-LLQ-06.TXT ;INTERNET-DRAFT: NETWORK WORKING GROUP, INTERNET ENGINEERING TASK FORCE, IETF; STANDARD WORKING DRAFT, INTERNET SOCIETY (ISOC) 4, RUE, URL: https://tools.ietf.org/html/draft-sekar-dns-llq-06, (20190823), XP015134842 discloses a protocol for extending the DNS protocol to support change notification, thus allowing clients to learn about changes to DNS data without polling the server.

CN 109 788 078 A discloses an application server switching method, apparatus and system.

ABLEY ICANN W KUMARI GOOGLE J, "A Mechanism for Remote-Triggered DNS Cache Flushes (DNS FLUSH); draft-jabley-dnsop-dns-flush-00.txt", A MECHANISM FOR REMOTE-TRIGGERED DNS CACHE FLUSHES (DNS FLUSH); DRAFT-JABLEY-DNSOP-DNS-FLUSH-00.TXT, INTERNET ENGINEERING TASK FORCE, IETF; STANDARD WORKING DRAFT, INTERNET SOCIETY (ISOC) 4, RUE DES FALAISES CH- 1205 GENEVA, SWITZERLAND, (20130624), pages 1 - 12, XP015090421 discloses a mechanism for prompt notification of zone changes between DNS authority servers that is usually employed to trigger immediate zone transfers.

### SUMMARY

A method for discovering and tracking addresses associated with 4G service endpoints is provided in accordance with appended claim 1. In this context, "separate from" means that the DNS discoverer micro-service is implemented on a computing platform separate from a consumer NF or SCP that needs to resolve a domain name and also separate from a computing platform that hosts the DNS server.

According to another aspect of the subject matter described herein, receiving the first DNS resolution request includes receiving the first DNS resolution request at a representational state transfer (REST) server interface provided by the DNS discoverer micro-service.

According to yet another aspect of the subject matter described herein, storing the address associated with the producer NF service comprises storing the address in a database local to the DNS discoverer micro-service along with the time to live of each address received from the DNS Server.

According to yet another aspect of the subject matter described herein, for every address received from the DNS server along with a time to live value when stored in a record in the database, a timer is started for the time period received in time to live field.

According to yet another aspect of the subject matter described herein, the 4G service endpoint comprises an endpoint associated with 4G evolved packet core (EPC) network node.

According to another aspect of the subject matter described herein, the 4G EPC network node comprises one of a serving gateway (S-GW), a home subscriber server (HSS), an offline charging system (OFCS), an online charging system (OCS), a mobility management entity (MME), a policy and charging rules function (PCRF), a packet gateway (P-GW), and other 4G NFs.

According to yet another aspect of the subject matter described herein, monitoring the FQDN for changes address includes continually monitoring the FQDN for changes in address until stopped in response to a message from the requesting node to cease monitoring the FQDN.

According to yet another aspect of the subject matter described herein, the message from the requesting node to cease monitoring the FQDN comprises a second DNS resolution request including a DELETE method type, and, in response, ceasing monitoring the FQDN.

According to yet another aspect of the subject matter described herein, the DNS discoverer micro-service includes a representational state transfer (REST) server interface to cease the monitoring of FQDN from the requesting node.

According to yet another aspect of the subject matter described herein, a system for discovering and tracking addresses associated with 4G service endpoints is provided in accordance with appended claim 6.

According to yet another aspect of the subject matter described herein, the DNS discoverer micro-service includes a representational state transfer (REST) server interface for receiving the first DNS resolution request from the requesting node.

According to another aspect of the subject matter described herein, the database is local to the DNS discoverer micro-service.

According to yet another aspect of the subject matter described herein, the DNS record change discoverer is configured to continually monitor the FQDN for changes address associated with the FQDN until stopped in response to a message from the requesting node to cease monitoring the FQDN.

According to yet another aspect of the subject matter described herein, a non-transitory computer readable medium is provided in accordance with appended claim 12.

The subject matter described herein may be implemented in hardware, software, firmware, or any combination thereof. As such, the terms "function" "node" or "module" as used herein refer to hardware, which may also include software and/or firmware components, for implementing the feature being described. In one exemplary implementation, the subject matter described herein may be implemented using a computer readable medium having stored thereon computer executable instructions that when executed by the processor of a computer control the computer to perform steps. Exemplary computer readable media suitable for implementing the subject matter described herein include non-transitory computer-readable media, such as disk memory devices, chip memory devices, programmable logic devices, and application specific integrated circuits. In addition, a computer readable medium that implements the subject matter described herein may be located on a single device or computing platform or may be distributed across multiple devices or computing platforms.

### BRIEF DESCRIPTION OF THE DRAWINGS

The subject matter described herein will now be explained with reference to the accompanying drawings of which:
Figure 1A is a network diagram illustrating an exemplary 5G network architecture;
Figure 1B illustrates an exemplary 4G evolved packet core (EPC) network architecture with two different public land mobile networks (PLMNs);
Figure 2 is a network diagram illustrating load balancing by a service communications proxy among 5G producer NF service instances and service endpoints exposed by the 5G producer NF service instances;
Figure 3 is a network diagram illustrating a DNS discoverer micro-service that enables a consumer NF or SCP to discover address information associated with producer NF service endpoints;
Figure 4 is a call flow diagram illustrating exemplary messaging for obtaining address information for producer NF service endpoints using a DNS discoverer micro-service;
Figure 5 is a call flow diagram illustrating a DNS change monitor and control flow using the DNS discoverer micro-service;
Figure 6 is a call flow diagram illustrating a stop DNS call flow using a DNS discoverer micro-service;
Figure 7 is a block diagram illustrating a network node implementing a DNS discoverer micro-service; and
Figure 8 is a flow chart illustrating an exemplary process for discovering and monitoring address information associated with 5G and non-5G service endpoints using the DNS discoverer micro-service.

### DETAILED DESCRIPTION

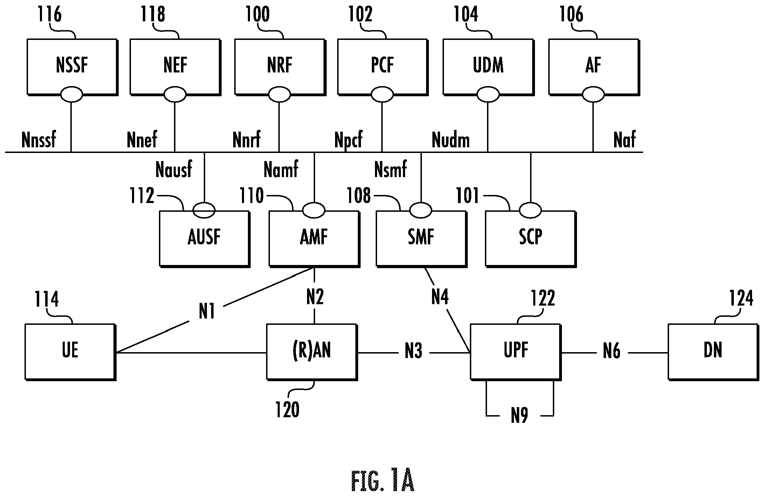

The subject matter described herein relates to methods, systems, and computer readable media for discovering and actively tracking address information associated with 4G service endpoints. Figure 1A is a block diagram illustrating an exemplary 5G system network architecture. The architecture in Figure 1A includes NRF **100** and SCP **101**, which may be located in the same home public land mobile network (HPLMN). As described above, NRF **100** may maintain profiles of available producer NF service instances and their supported services and allow consumer NFs or SCPs to subscribe to and be notified of the registration of new/updated producer NF service instances. SCP **101** may also support service discovery and selection of producer NFs. In addition, SCP **101** may perform load balancing of connections between consumer and producer NFs.

NRF **100** is a repository for NF profiles. In order to communicate with a producer NF, a consumer NF or an SCP must obtain the NF profile from NRF **100**. The NF profile is a JSON data structure defined in 3GPP TS 29.510. Table 1 shown below illustrates attributes of the NF profile as defined in 3GPP TS 29.510.

**Table 1: NF Profile Definition**

| **Attribute name** | **Data type** | **P** | **Cardinality** | **Description** |
|---|---|---|---|---|
| nflnstanceld | Nflnstanceld | M | 1 | Unique identity of the NF Instance. |
| nfType | NFType | M | 1 | Type of Network Function |
| nfStatus | NFStatus | M | 1 | Status of the NF Instance (NOTE 5) |
| heartBeatTimer | integer | C | 0..1 | Time in seconds expected between 2 consecutive heart-beat messages from an NF Instance to the NRF. It may be included in the registration request. When present in the request it shall contain the heartbeat time proposed by the NF service consumer. |
| | | | | It shall be included in responses from NRF to registration requests (PUT) or in NF profile updates (PUT or PATCH). If the proposed heartbeat time is acceptable by the NRF based on the local configuration, it shall use the same value as in the registration request; otherwise the NRF shall override the value using a preconfigured value. |
| plmnList | array(Plmnld) | C | 1..N | PLMN(s) of the Network Function (NOTE 7). |
| | | | | This IE shall be present if this information is available for the NF. If not provided, PLMN ID(s) of the PLMN of the NRF are assumed for the NF. |
| sNssais | array(Snssai) | O | 1..N | S-NSSAIs of the Network Function. If not provided, the NF can serve any S-NSSAI. |
| | | | | When present this IE represents the list of S-NSSAIs supported in all the PLMNs listed in the plmnList IE. |
| perPlmnSnssaiList | array(PlmnSns sai) | O | 1.. N | This IE may be included when the list of S-NSSAIs supported by the NF for each PLMN it is supporting is different. When present, this IE shall include the S-NSSAIs supported by the Network Function for each PLMN supported by the Network Function. When present, this IE shall override sNssais IE. (NOTE 9) |
| nsiList | array(string) | O | 1..N | NSI identities of the Network Function. |
| | | | | If not provided, the NF can serve any NSI. |
| Fqdn | Fqdn | C | 0..1 | FQDN of the Network Function (NOTE 1) (NOTE 2). For AMF, the FQDN registered with the NRF shall be that of the AMF Name (see 3GPP TS 23.003 [12] clause 28.3.2.5). |
| interPlmnFqdn | Fqdn | C | 0..1 | If the NF needs to be discoverable by other NFs in a different PLMN, then an FQDN that is used for inter-PLMN routing as specified in 3GPP TS 23.003 [12] shall be registered with the NRF (NOTE 8). |
| | | | | A change of this attribute shall result in triggering a "NF_PROFILE_CHANGED" notification from NRF towards subscribing NFs located in a different PLMN, but the new value shall be notified as a change of the "fqdn" attribute. |
| ipv4Addresses | array(Ipv4Addr ) | C | 1..N | IPv4 address(es) of the Network Function (NOTE 1) (NOTE 2) |
| ipv6Addresses | array(Ipv6Addr ) | C | 1..N | IPv6 address(es) of the Network Function (NOTE 1) (NOTE 2) |
| allowedPlmns | array(Plmnld) | O | 1..N | PLMNs allowed to access the NF instance. |
| | | | | If not provided, any PLMN is allowed to access the NF. |
| | | | | A change of this attribute shall not trigger a "NF_PROFILE_CHANGED" notification from NRF, and this attribute shall not be included in profile change notifications to subscribed NFs. |
| allowedNfTypes | array(NFType) | O | 1..N | Type of the NFs allowed to access the NF instance. |
| | | | | If not provided, any NF type is allowed to access the NF. |
| | | | | A change of this attribute shall not trigger a "NF_PROFILE_CHANGED" notification from NRF, and this attribute shall not be included in profile change notifications to subscribed NFs. |
| allowedNfDomains | array(string) | O | 1..N | Pattern (regular expression according to the ECMA-262 dialect [8]) representing the NF domain names allowed to access the NF instance. |
| | | | | If not provided, any NF domain is allowed to access the NF. |
| | | | | A change of this attribute shall not trigger a "NF_PROFILE_CHANGED" notification from NRF, and this attribute shall not be included in profile change notifications to subscribed NFs. |
| allowedNssais | array(Snssai) | O | 1..N | S-NSSAI of the allowed slices to access the NF instance. |
| | | | | If not provided, any slice is allowed to access the NF. |
| | | | | A change of this attribute shall not trigger a "NF_PROFILE_CHANGED" notification from NRF, and this attribute shall not be included in profile change notifications to subscribed NFs. |
| Priority | integer | O | 0..1 | Priority (relative to other NFs of the same type) in the range of 0-65535, to be used for NF selection; lower values indicate a higher priority. If priority is also present in the nfServiceList parameters, those will have precedence over this value. (NOTE 4). |
| | | | | The NRF may overwrite the received priority value when exposing an NFProfile with the Nnrf_NFDiscovery service. |
| Capacity | integer | O | 0..1 | Static capacity information in the range of 0-65535, expressed as a weight relative to other NF instances of the same type; if capacity is also present in the nfServiceList parameters, those will have precedence over this value. (NOTE 4). |
| Load | integer | O | 0..1 | Dynamic load information, ranged from 0 to 100, indicates the current load percentage of the NF. |
| Locality | string | O | 0..1 | Operator defined information about the location of the NF instance (e.g. geographic location, data center) (NOTE 3) |
| udrlnfo | Udrlnfo | O | 0..1 | Specific data for the UDR (ranges of SUPI, group ID ...) |
| udmInfo | Udmlnfo | O | 0..1 | Specific data for the UDM (ranges of SUPI, group ID...) |
| ausflnfo | Ausflnfo | O | 0..1 | Specific data for the AUSF (ranges of SUPI, group ID...) |
| amflnfo | Amflnfo | O | 0..1 | Specific data for the AMF (AMF Set ID, ...) |
| smflnfo | Smflnfo | O | 0..1 | Specific data for the SMF (DNN's, ...) |
| upflnfo | Upflnfo | O | 0..1 | Specific data for the UPF (S-NSSAI, DNN, SMF serving area, interface...) |
| pcflnfo | Pcflnfo | O | 0..1 | Specific data for the PCF |
| bsflnfo | Bsflnfo | O | 0..1 | Specific data for the BSF |
| chflnfo | Chflnfo | O | 0..1 | Specific data for the CHF |
| nrflnfo | Nrflnfo | O | 0..1 | Specific data for the NRF |
| custom Info | object | O | 0..1 | Specific data for custom Network Functions |
| recoveryTime | DateTime | O | 0..1 | Timestamp when the NF was (re)started (NOTE 5) (NOTE 6) |
| nfServicePersisten ce | boolean | O | 0..1 | If present, and set to true, it indicates that the different service instances of a same NF Service in this NF instance, supporting a same API version, are capable to persist their resource state in shared storage and therefore these resources are available after a new NF service instance supporting the same API version is selected by a NF Service Consumer (see 3GPP TS 23.527 [27]). |
| | | | | Otherwise, it indicates that the NF Service Instances of a same NF Service are not capable to share resource state inside the NF Instance. |
| nfServices | array(NFServic e) | O | 1..N | List of NF Service Instances. It shall include the services produced by the NF that can be discovered by other NFs, if any. |
| nfProfileChanges Supportlnd | boolean | O | 0..1 | NF Profile Changes Support Indicator. |
| | | | | See Annex B. |
| | | | | This IE may be present in the NFRegister or NFUpdate (NF Profile Complete Replacement) request and shall be absent in the response. |
| | | | | true: the NF Service Consumer supports receiving NF Profile Changes in the response. |
| | | | | false (default): the NF Service Consumer does not support receiving NF Profile Changes in the response. |
| | | | | Write-Only: true |
| nfProfileChangesIn d | boolean | O | 0..1 | NF Profile Changes Indicator. See Annex B. |
| | | | | This IE shall be absent in the request to the NRF and may be included by the NRF in NFRegister or NFUpdate (NF Profile Complete Replacement) response. |
| | | | | true: the NF Profile contains NF Profile changes. |
| | | | | false (default): complete NF Profile. |
| | | | | Read-Only: true |
| defaultNotification Subscriptions | array(DefaultN otificationSubs cription) | O | 1..N | Notification endpoints for different notification types. (NOTE 10) |
| NOTE 1: At least one of the addressing parameters (fqdn, ipv4address or ipv6adress) shall be included in the NF Profile. If the NF supports the NF services with "https" URI scheme (i.e use of TLS is mandatory), then the FQDN shall be provided in the NF Profile or the NF Service profile (see clause 6.1.6.2.3). See NOTE 1 of Table 6.1.6.2.3-1 for the use of these parameters. If multiple ipv4 addresses and/or ipv6 addresses are included in the NF Profile, the NF Service Consumer of the discovery service shall select one of these addresses randomly, unless operator defined local policy of IP address selection, in order to avoid overload for a specific ipv4 address and/or ipv6 address. | | | | |
| NOTE 2: If the type of Network Function is UPF, the addressing information is for the UPF N4 interface. | | | | |
| NOTE 3: A requester NF may use this information to select a NF instance (e.g. a NF instance preferably located in the same data center). | | | | |
| NOTE 4: The capacity and priority parameters, if present, are used for NF selection and load balancing. The priority and capacity attributes shall be used for NF selection in the same way that priority and weight are used for server selection as defined in IETF RFC 2782 [23]. | | | | |
| NOTE 5: The NRF shall notify NFs subscribed to receiving notifications of changes of the NF profile, if the NF recoveryTime or the nfStatus is changed. See clause 6.2 of 3GPP TS 23.527 [27]. | | | | |
| NOTE 6: A requester NF may consider that all the resources created in the NF before the NF recovery time have been lost. This may be used to detect a restart of a NF and to trigger appropriate actions, e.g. release local resources. See clause 6.2 of 3GPP TS 23.527 [27]. | | | | |
| NOTE 7: A NF may register multiple PLMN IDs in its profile within a PLMN comprising multiple PLMN IDs. If so, all the attributes of the NF Profile shall apply to each PLMN ID registered in the plmnList. As an exception, attributes including a PLMN ID, e.g. IMSI-based SUPI ranges, TAIs and GUAMIs, are specific to one PLMN ID and the NF may register in its profile multiple occurrences of such attributes for different PLMN IDs (e.g. the UDM may register in its profile SUPI ranges for different PLMN IDs). | | | | |
| NOTE 8: Other NFs are in a different PLMN if they belong to none of the PLMN ID(s) configured for the PLMN of the NRF. | | | | |
| NOTE 9: This is for the use case where an NF (e.g. AMF) supports multiple PLMNs and the slices supported in each PLMN are different. See clause 9.2.6.2 of 3GPP TS 38.413 [29]. | | | | |
| NOTE 10: If notification endpoints are present both in the profile of the NF instance (NFProfile) and in some of its NF Services (NFService) for a same notification type, the notification endpoint(s) of the NF Services shall be used for this notification type. | | | | |

As indicated in Table 1, the NF profile definition includes at least one of an FQDN, an IP version 4 address or an IP version 6 address. However, there is no requirement that the NF profile include individual IP addresses or IP endpoints associated with a producer NF service endpoint located on the producer NF service instance.

In Figure 1A, any of the nodes (other than SCP **101** and NRF **101**) can be either consumer NFs or producer NFs, depending on whether they are requesting or providing services. In the illustrated example, the nodes include a policy control function (PCF) **102** that performs policy related operations in a network, a user data management (UDM) function **104** that manages user data, and an application function (AF) **106** that provides application services. The nodes illustrated in Figure 1A further include a session management function (SMF) **108** that manages sessions between access and mobility management function (AMF) **110** and PCF **102**. AMF **110** performs mobility management operations similar to those performed by a mobility management entity (MME) in 4G networks. An authentication server function (AUSF) **112** performs authentication services for user equipment (UEs), such as UE **114**, seeking access to the network.

A network slice selection function (NSSF) **116** provides network slicing services for devices seeking to access specific network capabilities and characteristics associated with a network slice. A network exposure function (NEF) **118** provides application programming interfaces (APIs) for application functions seeking to obtain information about Internet of things (IoT) devices and other UEs attached to the network. NEF **118** performs similar functions to the service capability exposure function (SCEF) in 4G networks.

A radio access network (RAN) **120** connects UE **114** to the network via a wireless link. Radio access network **120** may be accessed using a g-Node B (gNB) (not shown in Figure 1A) or other wireless access point. A user plane function (UPF) **122** can support various proxy functionality for user plane services. One example of such proxy functionality is multipath transmission control protocol (MPTCP) proxy functionality. UPF **122** may also support performance measurement functionality, which may be used by UE **114** to obtain network performance measurements. Also illustrated in Figure 1A is a data network (DN) **124** through which UEs access data network services, such as Internet services.

Address information associated with service endpoints resident on any of the NFs illustrated in Figure 1A that provide services can be tracked using the DNS discoverer micro-service described herein. In addition, non-5G service endpoints that provide services under given FQDN may be discovered and tracked by the DNS discover micro-service described herein. Thus, the term "producer NF service endpoint" as used herein is intended to refer to a service endpoint present on any of the 5G or non-5G service provider nodes. Non-5G service provider nodes include 3G, 4G, or subsequent generation (post-5G) counterpart and non-3GPP service provider nodes.

As stated above, producer NFs register their NF profiles with the NRF. Consumer NFs can discover producer NFs that have registered to provide a specific service by obtaining the NF profiles from the NRF. Consumer NFs can communicate directly with NF service producer NFs. Alternatively, consumer NFs can communicate indirectly with producer NFs via the SCP. In the direct communications mode, the consumer NF performs discovery of the target producer NF either by local configuration or via the NRF. The consumer NF then communicates directly with the target service producer NF. In indirect communications mode, the consumer NF sends service request messages to the SCP, and the SCP may perform service discovery and selection of a producer NF on behalf of a consumer NF. In either the direct or indirect communications mode, the DNS discoverer micro-service described herein may receive DNS resolution request from the consumer NF or from the SCP, query a DNS server on behalf of the consumer NF or SCP, communicate the address information associated with producer NF service endpoints to the consumer NF or SCP, and continually monitor the FQDN received in the DNS resolution request for changes in address associated with the FQDN.

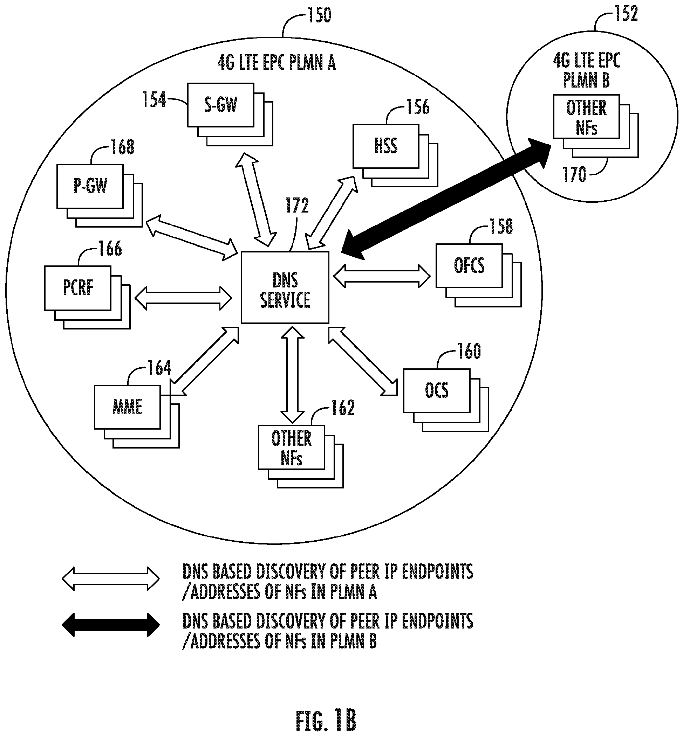

Figure 1B illustrates an exemplary 4G evolved packet core (EPC) network architecture with two different public land mobile networks (PLMNs). In Figure 1B, PLMN A **150** and PLMN B **152** are illustrated. PLMN A **150** includes plural EPC network nodes. In the illustrated example, the EPC network nodes include a serving gateway (S-GW) **154**, a home subscriber server (HSS) **156**, an offline charging system (OFCS) **158**, an online charging system (OCS) **160**, other NFs **162**, a mobility management entity (MME) **164**, a policy and charging rules function (PCRF) **166**, and a packet gateway (P-GW) **168**. PLMN **152** may also include 4G NFs **170**, which can include any of the MNFs illustrated in PLMN **150**.

Network nodes seeking to obtain service from 4G NFs **154-170** or service endpoints on 4G NFs **154-170** rely on DNS service **172** for service discovery and monitoring for changes in IP address. When a consumer, which could include any of the NFs illustrated in Figure 1A or 1B seeks to obtain a service from a 4G service endpoint, the consumer relies on DNS to determine the IP address of the endpoint. Using DNS reduces the need for manual configuration of service consumers with the IP addresses of 4G service endpoints and assists in traffic migration from one instance of an NF to another when the FQDN to IP address mapping changes, as DNS gracefully handles such changes. DNS responses may include a weight factor for each IP endpoint that can be set based on optional preferences. NFs can load balance in the case that an FQDN resolves to multiple IP addresses identifying multiple NF instances. For example, if a new instance of a P-GW is installed on a network, the new P-GW will be favored to be selected in attempt to balance traffic to existing P-GW instances. DNS responses include a validity timer for the IP endpoints/addresses received. These addresses are generally cached and used by the NFs for this expiry period to avoid DNS queries for every new request. Caching IP address mappings for the DNS expiration period saves processing bandwidth and latency over re-querying the DNS server for every new service request.

As stated above, challenges with such an approach that uses DNS to discover 4G service endpoints include the fact that DNS responses come with an expiry period, which must be tracked by each consumer NF in order to avoid a DNS query per service request. This puts additional burdens on the consumer NFs to maintain timers per resolved IP address. In the case where target NFs scale up (i.e., increasing the number of 4G service instances), additional IP endpoints and addresses are detected at the expiry because there is no way to actively detect this condition. In the case where target NFs have scaled down or changed IP addresses (in the case of migration), there is no graceful way to detect this change. Routing failures to dropped IP addresses trigger DNS rediscovery. DNS servers also go out of service for maintenance or scale up or scale down reasons. When this occurs, all of the NF instances that rely on the DNS service require reconfiguration to communicate with the scaled up or scaled down DNS instances. To avoid these and other difficulties, the subject matter described herein includes a DNS micro service, which will be described in more detail below.

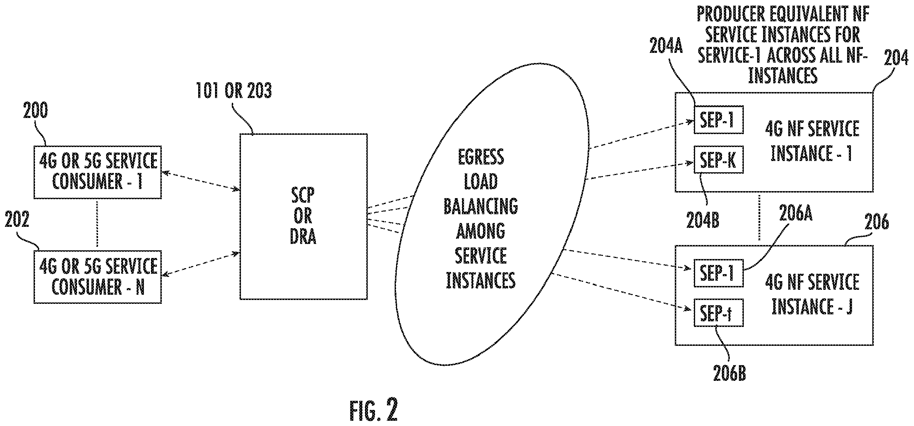

One problem that occurs in the architecture illustrated in Figures 1A and 1B is that the service communication proxy, a Diameter relay agent (DRA), or consumer NF may have insufficient information to load balance among service endpoints resident on 4G NF service instances. Figure 2 illustrates this problem. Referring to Figure 2, service communications proxy **101** or DRA **203** resides between 4G or 5G consumer NFs **200** and **202** and 4G producer NFs **204** and **206**. For example, if consumer NFs **200** and **202** are 4G NFs, then SCP **101** or DRA **203** will include DRA functionality, which includes routing Diameter messages based on Diameter layer information in the messages, including distributing such messages to 4G producer NFs **204** and **206**. If consumer NFs **200** and **202** are 5G NFs, then SCP **101** or DRA **203** will include SCP functionality, which includes routing 5G messages based on IP addresses in the messages. In either case, SCP **101** or DRA **203** (as well as consumer NFs **200** and **202**) may utilize the DNS discover microservice described herein to resolve FQDNs into IP addresses of 4G service endpoints and to monitor the FQDNs for changes in mappings between the FQDNs and IP addresses of 4G service endpoints. It is also possible that SCP or DRA **101** and **203** may include both SCP and DRA functionality. 4G producer NF **204** includes producer NF service endpoints **204A** and **204B**. 4G producer NF service instance **206** includes producer NF service endpoints **206A** and **206B**.

In operation, consumer NFs **200** and **202** connect to service communications proxy **101** or DRA **203**, and service communications proxy **101** or DRA **203** load balances traffic among the producer NF service endpoints. Service communications proxy **101** or DRA **203** producer NF service endpoints for load balancing from the above-described NF profile (in the 5G case) or from DNS (in the 4G case) and NF service contents that producer NFs **204** and **206** have registered with NRF **100** (for the 5G case only). However, as indicated above, because registering the address information associated with the individual service endpoints is not required, the load balancing performed by SCP **101** or DRA **203** may not evenly balance a load among service endpoints.

As indicated above, in one scenario, a producer NF service instance may only register a fully qualified domain name at the NF service level. In another scenario, no IP endpoints and no fully qualified domain name may be registered at the NF service level and only the fully qualified domain name may be registered at the NF instance level. In either of these scenarios, the service communications proxy lacks sufficient information for adequate load balancing.

The consumer NF, DRA, or service communications proxy may determine the IP endpoints of service instances directly by the NF service or NF service instance through DNS-SRV records. In another example, the IP addresses may be exposed by the NF service or NF service instance through DNS A/AAAA records and ports are taken as SCP configuration.

The addresses of producer NF service endpoints need to be known to the consumer NF, DRA, or SCP when any NF registers or updates a registration. The addresses of producer NF service endpoints also need to be known when the IP addresses or IP endpoints change without any NF profile or NF service updates. The consumer NF, DRA, or SCP needs to track these changes for continued routing and load balancing purposes. The DNS discoverer micro-service described herein discovers addresses of producer NF service endpoints and monitors FQDNs for changes in address associated with the FQDN.

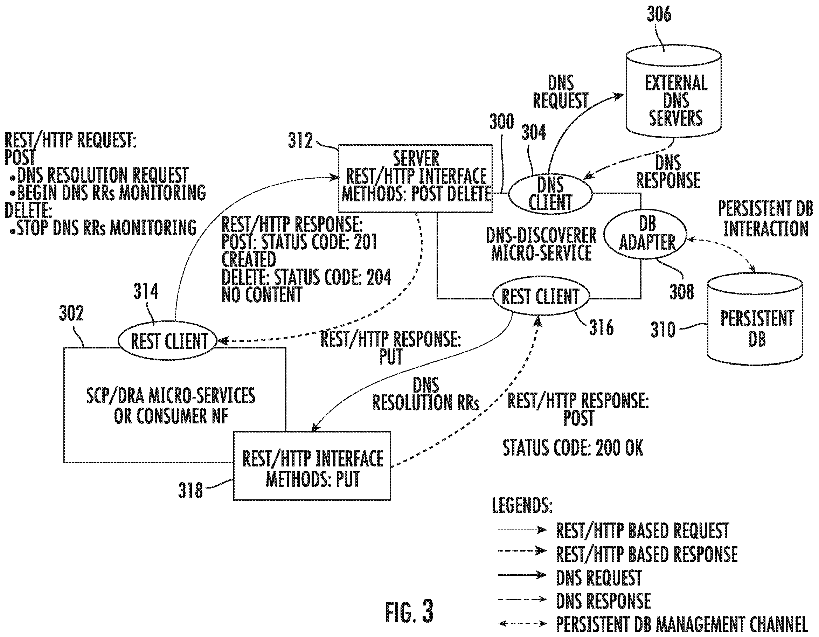

As indicated above, the DNS discoverer (DNS-D) micro-service solves at least some of the problems associated with discovery and tracking of service endpoints. The DNS discoverer micro-service queries DNS servers to obtain address information for producer NF service endpoints and provides that information to an SCP, DRA, or consumer NF. Figure 3 is a network diagram illustrating a network architecture that includes the DNS discoverer micro-service. Referring to Figure 3, DNS discoverer micro-service **300** may be implemented on a computing platform separate from or the same as SCP/DRA micro-services or consumer NF **302**. DNS discoverer micro-service **300** includes a DNS discoverer DNS client **304** that interfaces with external DNS servers **306**. DNS discoverer micro-service **300** also includes a database adapter **308** that maintains NF service endpoint information in a persistent database **310**. DNS discoverer micro-service **300** includes a DNS discoverer server interface **312** that exposes the DNS discoverer micro-service to SCP/DRA micro-services or consumer NF **302** or non-5G service consumers. In the illustrated example, server interface **312** is a representational state transfer (REST) interface that interfaces with a REST client **314** provided by SCP/DRA micro-services or consumer NF **302**. DNS discoverer micro-service **300** further includes a DNS discoverer REST client **316** that interfaces with a server interface **318** of SCP/DRA micro-services or consumer NF **302**.

DNS discoverer micro-service **300** can be used to resolve the challenge(s) identified above. In one example, DNS discoverer micro-service **300** may expose a REST/HTTP interface to listen for DNS resolution / Monitoring requests from an SCP, DRA, 4G or 5G NF, or any other service consumer(s). Consumer(s) send DNS requests as HTTP POST messages with callback uniform resource indicators (URIs) where DNS responses are expected. Being an asynchronous service, DNS discoverer micro-service **300** sends back a 201 created message indicating a request is accepted. DNS discoverer micro-service **300** queries external DNS servers with the requested FQDN. After getting successful DNS resolution from these external DNS servers, DNS discoverer micro-service **300** sends a DNS response to the callback URI received in a DNS resolution request as an HTTP PUT request. DNS discoverer micro-service **300** caches/stores the DNS query responses from external DNS server(s) and the times to live (TTLs) (received in the responses from the DNS servers) to enable DNS change monitoring (discussed below).

DNS discoverer micro-service **300** continually monitors (until stopped) all the requested FQDNs for the TTLs received in DNS query responses. DNS responses from external DNS servers are matched at every iteration with stored responses. Differences are indicated to the consumers in the callback URI as an HTTP PUT request. Consumer(s) may opt to stop monitoring by sending an HTTP DELETE request message to DNS discover micro-service **300**.

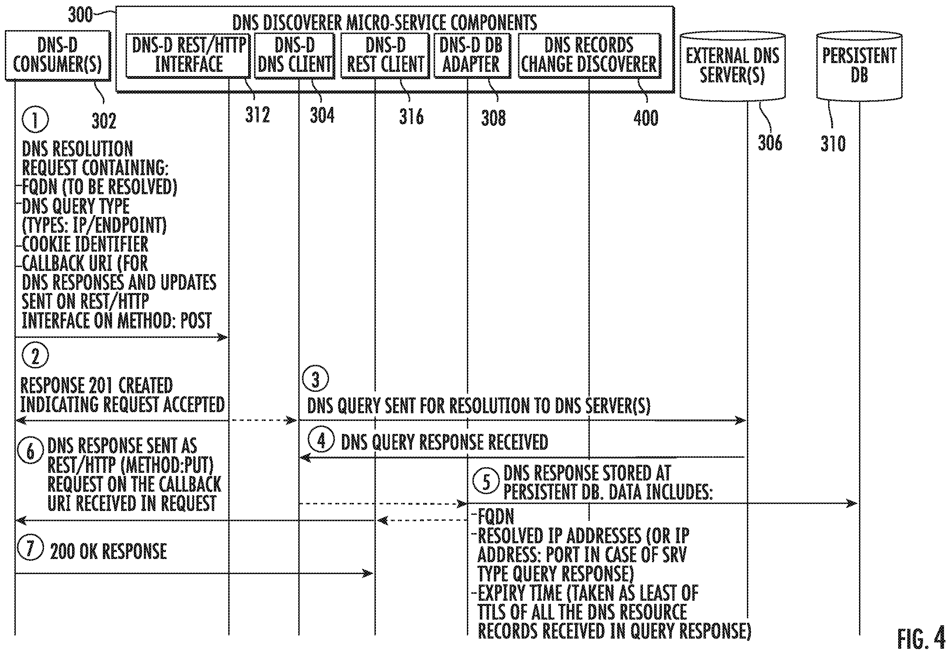

Figure 4 is a call flow diagram illustrating DNS request servicing performed by DNS discoverer micro-service **300**. The DNS discoverer micro-service **300** includes the components illustrated in and described above with regard to Figure 3. In addition to the components illustrated in Figure 3, DNS discoverer micro-service **300** includes a DNS records change discoverer **400** that monitors requested fully qualified domain names for the time to live values received in DNS query responses, re-queries DNS servers **306** when TTLs have expired, and communicates changes in resolved IP addresses or IP endpoints to consumer NFs, SCPs, or non-5G service consumers.

Referring to the call flow in Figure 4, in line 1, a DNS consumer, such as SCP/DRA micro-services or consumer NF **302**, sends a DNS resolution request to server interface of DNS discoverer micro-service **300**. The DNS resolution request includes the FQDN to be resolved, the DNS query type, where the query type indicates an IP address or an IP endpoint, a cookie identifier, and a callback URI for DNS responses and updates sent on DNS discoverer REST client **316** to the querying DNS consumer.

In line 2 of the call flow diagram, DNS discoverer server interface **312** sends a response indicating that the request has been received and accepted.

In line 3 of the call flow diagram, DNS client component **304** of DNS discoverer micro-service **300** sends a query to external DNS servers **306** to resolve the fully qualified domain name in the DNS resolution request.

In line 4 of the call flow diagram, DNS servers **306** respond to DNS client **304** with a response to the DNS query. The response may include one or more IP addresses or IP endpoints that reside on a producer NF service instance corresponding to the FQDN in the DNS query.

In line 5 of the call flow diagram, DNS client component **304** communicates the IP address or IP endpoint information to DNS discoverer database adapter **308** and DNS discoverer database adapter **308** forwards the response to persistent database **310**. The response includes the fully qualified domain name from the DNS resolution request, the resolved IP address (or IP addresses and ports depending on the type of response), and expiration time, which is the lowest TTL value of all of the TTL values of DNS resource records received in the query response.

In line 6, DNS discoverer database adapter **308** sends a message to DNS discoverer REST client **316** indicating that the database record has been created, and DNS discoverer client **316** sends the DNS response to SCP micro-services or consumer NF **302**. The DNS response is sent on the callback URI received in the request. In line 7, SCP/DRA micro-services or consumer NF **302** sends a 200 OK response to DNS discoverer REST client **316**.

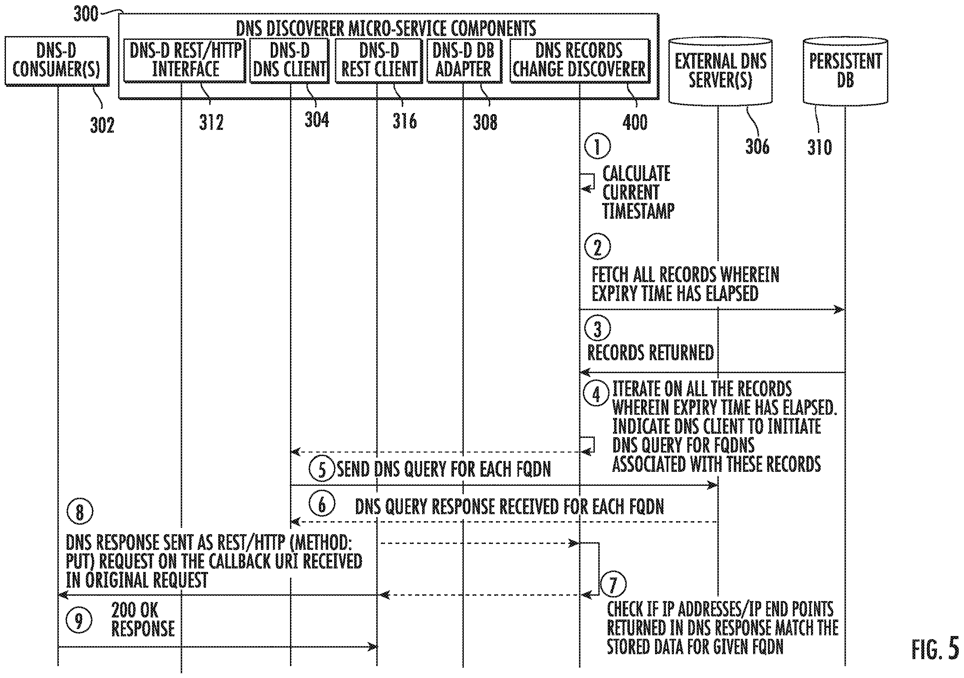

DNS records change discoverer **400** detects changes in resolved IP addresses or IP endpoints corresponding to a monitored FQDN. DNS records change discoverer **400** may periodically fetch all DNS records from storage and identify any records where the TTLs received in the DNS query responses have lapsed. For each record where the TTL has lapsed, DNS records change discoverer **400** may re-query the external DNS servers to determine any changes. If any changes have occurred, no further action is required. If a change has occurred, DNS records change discoverer **400** may notify consumer NFs or SCPs that are subscribed to the given service through a REST/HTTP PUT request on the call back URI received in the original DNS request. Figure 5 is a call flow diagram illustrating a DNS change monitoring call flow. Referring to Figure 5, in line 1, DNS records change discoverer **400** calculates the current timestamp. In line 2, DNS records change discoverer **400** queries persistent database **310** for all records that have a TTL or expiry time that has lapsed. In line 3 of the call flow diagram, persistent database **310** returns DNS records with lapsed call flows to DNS records change discoverer **400**.

In line 4 of the call flow diagram, DNS records change discoverer **400** notifies DNS discoverer client **304** of each FQDN for which the TTL has lapsed. In line 5, DNS discoverer client **304** queries external DNS servers **306** for each FQDN for which the TTL has lapsed. In line 6 of the call flow diagram, DNS discoverer DNS client **304** receives a DNS query response for each FQDN queried in line 5. In line 7, DNS discoverer DNS client **304** notifies DNS records change discoverer of the IP addresses or IP endpoints received in the responses in line 6. DNS records change discoverer **400** determines whether the IP addresses or IP endpoints received match the stored data for each FQDN. If the IP addresses or IP endpoints match, no further action is required on the part of DNS record change discoverer **400**. However, if the IP addresses or IP endpoints do not match, in line 8, DNS records change discoverer **400** communicates the changed IP addresses or IP endpoints to DNS discoverer REST client **316**. DNS discoverer REST client **316** informs SCP/DRA micro-services or consumer NF **302** of the change in IP addresses or IP endpoints using an HTTP put request on the call back URI received in the original request. In line 9 of the call flow diagram, SCP/DRA micro-services or consumer NF **302** acknowledge receipt of the DNS responses in line 8.

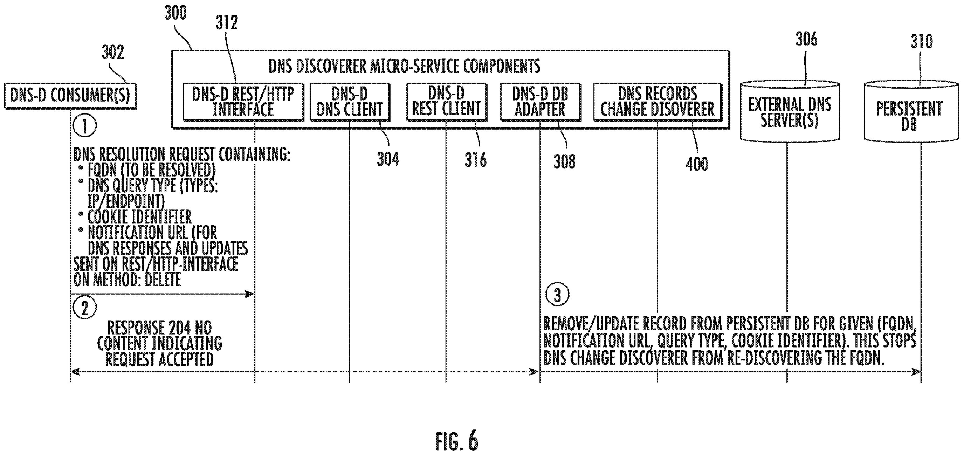

Another operation performed by DNS discoverer micro-service **300** is to stop DNS monitoring, for example, when a 4G or 5G consumer NF, DRA, or SCP notifies DNS discoverer micro-service **300** that the 4G or 5G consumer NF, DRA or SCP desires to stop monitoring a given FQDN. Figure 6 illustrates such a call flow. Referring to the call flow in Figure 6, in line 1, DRA/SCP micro-services or consumer NF **302** sends a DNS resolution request with the FQDN to be resolved but specifying the delete method to stop DNS monitoring for the FQDN. In line 2 of the call flow diagram, DNS discoverer server interface **312** responds to the client indicating that the request has been accepted. In line 3 of the call flow diagram, DNS discoverer server interface **312** notifies DNS discoverer database adapter **308** that the consumer desires to cease monitoring the FQDN. DNS discoverer database adapter **308** sends a message to persistent database **310** to remove or update the record from persistent database **310** corresponding to the FQDN and notification URL specified in the original DNS resolution request. The message in line 3 will stop the DNS records change discoverer **400** from re-querying DNS servers **306** for the FQDN for this particular consumer.

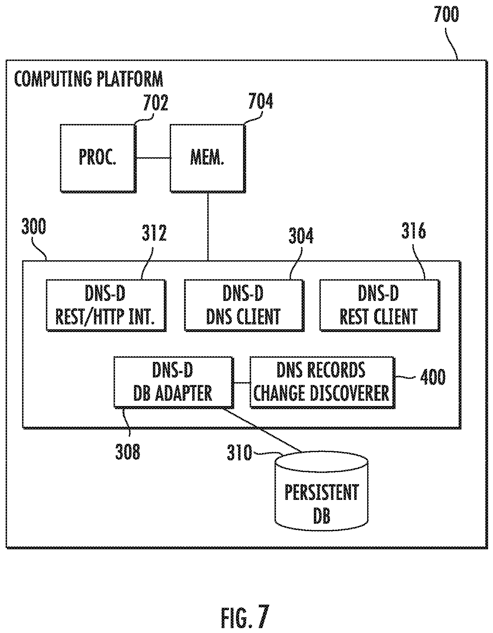

Figure 7 is a block diagram illustrating an exemplary architecture for a computing platform including DNS discoverer micro-service **300**. Referring to Figure 7, computing platform **700** includes at least one processor **702** and a memory **704**. DNS discoverer micro-service **300** may be implemented by executable instructions embodied in memory **704**. In the illustrated example, DNS discoverer micro-service **300** includes DNS discoverer server interface **312,** DNS discoverer DNS client **304**, DNS discoverer REST client **316**, DNS discoverer database adapter **308**, and DNS records change discoverer **400**. Persistent database **310** may also reside in computing platform **700** for storing the IP addresses or IP endpoints for resolved FQDNs.

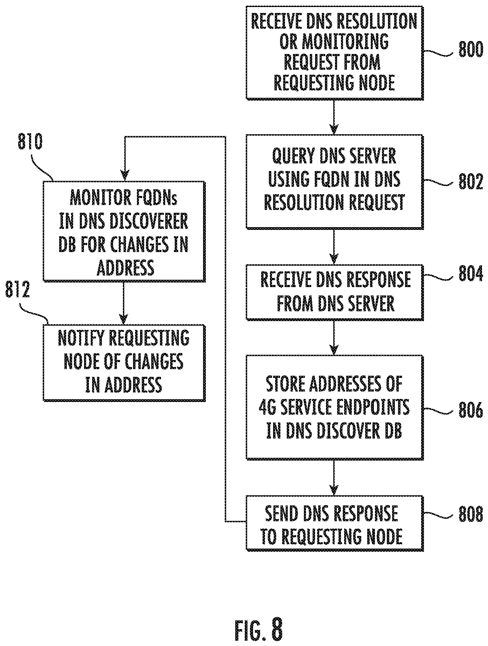

Figure 8 is a flow chart illustrating an exemplary process for actively discovering and tracking address information associated with 5G and non-5G service endpoints. Referring to Figure 8, in step **800**, a DNS resolution or monitoring request is received from a requesting node. For example, DNS discoverer micro-service **300** may receive a DNS resolution or monitoring request with an FQDN from a DNS discoverer consumer, such as an SCP, a DRA, a 4G NF, or a 5G NF. The DNS resolution or monitoring request may include the FQDN of a 4G service endpoint.

In step **802**, a DNS server is queried using the FQDN in the DNS resolution request. For example, DNS discoverer micro-service **300** may query external DNS servers **306** using an FQDN in a DNS request received from a DNS discoverer consumer.

In step **804**, a DNS response is received from the DNS server and, in step **806**, the addresses of 4G service endpoints are stored in the DNS discoverer database (i.e., in persistent database **310**). For example, DNS discoverer micro-service **300** may receive DNS responses from DNS servers **306** and store the IP addresses or IP endpoints associated with producer NF service endpoints in database **310**. In one example, the DNS resolution request from DNS discoverer micro-service **300** may be a DNS-A resolution request, and DNS servers **306** may return an IPv4 address or addresses corresponding to a service endpoint or endpoints associated with the FQDN. In another example, the DNS resolution request may be a DNS-AAAA request, and DNS servers **306** may return an IPv6 address or addresses corresponding to a service endpoint or endpoints associated with the FQDN. In yet another example, the DNS resolution request may be a DNS-SRV request, and DNS servers may return an IP address(es) and port number(s) corresponding to a service endpoint or endpoints associated with the FQDN.

In step **808**, a DNS response is sent to the requesting node. For example, DNS discoverer micro-service **300** may send a response to the requesting node including addresses associated with producer NF service endpoints received in the DNS response from DNS servers **306**.

In step **810**, FQDNs in the DNS discoverer database are monitored for changes in address. For example, DNS records change discoverer **400** may, for each FQDN whose TTL has expired in database **310**, query external DNS servers **306** to determine any IP address or IP endpoint changes.

In step **812**, the requesting node is notified of any changes in IP address or IP endpoint associated with the FQDN. For example, DNS records change discoverer **400** may notify SCP/DRA micro-services or consumer NF **302** of any detected changes in IP address(es) or IP endpoints associated with an FQDN for which SCP/DRA micro-services or consumer NF **302** has queried DNS discoverer micro-service **300**

Thus, the subject matter described herein includes a DNS discoverer micro-service that discovers IP addresses or IP endpoints associated with 4G service endpoints and monitors FQDNs for changes in such addresses. One advantage of such a service is the fact that 4G and 5G consumer NFs, DRAs, and SCPs are not required to discover or actively monitor 4G NFs for changes in IP addresses or IP endpoints associated with a service. The consumer NF, DRA, or SCP is only required to learn the FQDN of a service and communicate the FQDN to the DNS discoverer micro-service. In addition, because the DNS discoverer micro-service actively monitors FQDNs for changes in IP address or IP endpoint, load balancing by nodes, such as DRAs, SCPs, and 4G and 5G consumer NFs, will be more evenly distributed among producer NF service endpoints.

It will be understood that various details of the presently disclosed subject matter may be changed without departing from the scope of the presently disclosed subject matter. Furthermore, the foregoing description is for the purpose of illustration only, and not for the purpose of limitation.

## Claims

1. A method for discovering and tracking addresses associated with 4G service endpoints, the method comprising:
at a domain name system, DNS, discoverer micro-service (300) separate from a requesting node and a DNS server (306), wherein the requesting node comprises a service communications proxy, SCP, a Diameter relay agent, DRA, or a 4G or 5G consumer NF:
receiving (800), from the requesting node, a first DNS resolution or monitoring request including a fully qualified domain name, FQDN, of a 4G service endpoint;
querying (802) the DNS server (306) using the FQDN of the 4G service endpoint extracted from the first DNS resolution or monitoring request;
receiving (804) a first response from the DNS server, the first response including an address associated with a 4G service endpoint associated with the FQDN;
storing (806) the address associated with the 4G service endpoint in a database (310);
communicating (808) the address associated with the 4G service endpoint to the requesting node;
monitoring (810) the FQDN for changes in address associated with the FQDN, wherein monitoring the FQDN comprises:
detecting expiration of a record storing the address associated with the 4G service endpoint in the database (310);
in response to detecting expiration of the record, querying the DNS server (306) using the FQDN;
receiving a second response from the DNS server (306);
comparing an address in the second response to the address associated with the FQDN stored in the record in the database (310); and
determining that a change in address associated with the FQDN has occurred in response to the address in the second response being different from the address associated with the FQDN stored in the record in the database (310); and
notifying (812) the requesting node of the changes in address associated with the FQDN.

2. The method of claim 1 wherein storing (806) the address associated with the 4G service endpoint comprises storing the address in a database (310) local to the DNS discoverer micro-service.

3. The method of claim 1 or claim 2 wherein monitoring (810) the FQDN for changes in address includes continually monitoring the FQDN for changes in address until stopped in response to a message from the requesting node to cease monitoring the FQDN.

4. The method of any preceding claim wherein the 4G service endpoint comprises an endpoint associated with 4G evolved packet core, EPC, network node.

5. The method of claim 4 wherein the 4G EPC network node comprises one of a serving gateway, S-GW, a home subscriber server, HSS, an offline charging system, OFCS, an online charging system, OCS, a mobility management entity, MME, a policy and charging rules function, PCRF, and a packet gateway, P-GW.

6. A system for discovering and tracking addresses associated with 4G service endpoints, the system comprising:
a computing platform (700) including at least one processor (702); and
a domain name system, DNS, discover micro-service (300) located on the computing platform (700) separate from a requesting node and a DNS server (306), wherein the requesting node comprises a service communications proxy, SCP,, a Diameter relay agent, DRA, or a 4G or 5G consumer NF and wherein the DNS discoverer micro-service (300) is implemented by the at least one processor (702) for receiving (800) a first DNS resolution or monitoring request from the requesting node, querying (802) the DNS server (306) using a fully qualified domain name, FQDN, of a 4G service endpoint from the first DNS resolution or monitoring request, receiving (804) a first response from the DNS server (306), the first response including an address associated with the 4G service endpoint associated with the FQDN, storing (806) the address associated with the 4G service endpoint in a database (310), communicating (808) the address associated with the 4G service endpoint to the requesting node, monitoring (810) the FQDN for changes in address associated with the FQDN, and notifying the requesting node of the changes in address associated with the FQDN, wherein the DNS discoverer micro-service (300) includes a DNS records change discoverer (400) for performing the monitoring of the FQDN by:
detecting expiration of a record storing the address associated with the 4G service endpoint in the database (310);
in response to detecting expiration of the record, querying the DNS server (306) using the FQDN;
receiving a second response from the DNS server (306);
comparing an address in the second response to the address associated with the 4G service endpoint stored in the record in the database (310); and
determining that a change in address associated with the FQDN has occurred in response to the address in the second response being different from the address associated with the 4G service endpoint stored in the record in the database (310).

7. The system of claim 6 wherein the DNS discoverer micro-service (300) includes a representational state transfer, REST, server interface (316) for receiving the first DNS resolution or monitoring request from the requesting node.

8. The system of claim 6 or claim 7 wherein the database (310) is local to the DNS discoverer micro-service (300).

9. The system of any one of claims 6 to 8 wherein the DNS records change discoverer (400) is configured to continually monitor the FQDN for changes in address until stopped in response to a message from the requesting node to cease monitoring the FQDN.

10. The system of any one of claims 6 to 9 wherein the 4G service endpoint comprises an endpoint associated with 4G evolved packet core, EPC, network node.

11. The system of claim 10 wherein the 4G EPC network node comprises one of a serving gateway, S-GW, a home subscriber server, HSS, an offline charging system, OFCS, an online charging system, OCS, a mobility management entity, MME, a policy and charging rules function, PCRF, and a packet gateway, P-GW.

12. A non-transitory computer readable medium having stored thereon executable instructions that when executed by a processor of a computer control the computer to perform steps comprising:
at a domain name system, DNS, discoverer micro-service (300) separate from a requesting node and a DNS server (306), wherein the requesting node comprises a service communications proxy, SCP, a Diameter relay agent, DRA, or a 4G or 5G consumer NF:
receiving (800), from the requesting node, a first domain name system, DNS, resolution or monitoring request including a fully qualified domain name, FQDN, of a 4G service endpoint;
querying (802) the DNS server (306) using the FQDN of the 4G service endpoint from the first DNS resolution or monitoring request;
receiving (804) a first response from the DNS server, the response including an address associated with the 4G service endpoint;
storing (806) the address associated with the 4G service endpoint in a database (310);
communicating (808) the address associated with the 4G service endpoint to the requesting node;
monitoring (810) the FQDN for changes in address associated with the FQDN, wherein monitoring the FQDN comprises:
detecting expiration of a record storing the address associated with the 4G service endpoint in the database (310);
in response to detecting expiration of the record, querying the DNS server (306) using the FQDN;
receiving a second response from the DNS server (306);
comparing an address in the second response to the address associated with the FQDN stored in the record in the database (310); and
determining that a change in address associated with the FQDN has occurred in response to the address in the second response being different from the address associated with the FQDN stored in the record in the database (310); and
notifying (812) the requesting node of the changes in address associated with the FQDN.

## Patentansprüche

1. Verfahren zum Auffinden und Verfolgen von Adressen, die 4G-Dienst-Endpunkten zugeordnet sind, wobei das Verfahren Folgendes umfasst:
bei einem Domänennamensystem-, DNS, Entdecker-Mikrodienst (300), der von einem anfordernden Knoten und einem DNS-Server (306) getrennt ist, wobei der anfordernde Knoten einen Dienstkommunikations-Proxy, (Service Communications Proxy, SCP) einen Durchmesser-Relais-Agenten, DRA, oder eine 4G- oder 5G-Verbraucher-NF Folgendes umfasst:
Empfangen (800), von dem anfordernden Knoten, einer ersten DNS-Auflösungs- oder Überwachungsanforderung, die einen vollständig qualifizierten Domänennamen (Fully Qualified Domain Name, FQDN) eines 4G-Dienst-Endpunkts enthält;
Abfragen (802) des DNS-Servers (306) unter Verwendung des FQDN des 4G-Dienst-Endpunkts, der aus der ersten DNS-Auflösungs- oder Überwachungsanforderung extrahiert wurde;
Empfangen (804) einer ersten Antwort von dem DNS-Server, wobei die erste Antwort eine Adresse enthält, die einem 4G-Dienst-Endpunkt zugeordnet ist, der dem FQDN zugeordnet ist;
Speichern (806) der Adresse, die dem 4G-Dienst-Endpunkt zugeordnet ist, in einer Datenbank (310);
Übermitteln (808) der dem 4G-Dienst-Endpunkt zugeordneten Adresse an den anfordernden Knoten;
Überwachen (810) des FQDN auf Änderungen der dem FQDN zugeordneten Adresse, wobei das Überwachen des FQDN Folgendes umfasst:
Erfassen des Ablaufs eines Datensatzes, der die dem 4G-Dienst-Endpunkt zugeordnete Adresse in der Datenbank (310) speichert;
als Reaktion auf das Erfassen des Ablaufs des Datensatzes, Abfragen des DNS-Servers (306) unter Verwendung des FQDN;
Empfangen einer zweiten Antwort von dem DNS-Server (306);
Vergleichen einer Adresse in der zweiten Antwort mit der Adresse, die dem FQDN zugeordnet ist, der in dem Datensatz in der Datenbank (310) gespeichert ist; und
Bestimmen, dass eine Änderung der Adresse, die dem FQDN zugeordnet ist, in Reaktion darauf aufgetreten ist, dass die Adresse in der zweiten Antwort sich von der Adresse unterscheidet, die dem FQDN zugeordnet ist, der in dem Datensatz in der Datenbank (310) gespeichert ist; und
Benachrichtigen (812) des anfordernden Knotens über die Änderungen der dem FQDN zugeordneten Adresse.

2. Verfahren nach Anspruch 1, wobei das Speichern (806) der dem 4G-Dienst-Endpunkt zugeordneten Adresse das Speichern der Adresse in einer Datenbank (310) umfasst, die für den DNS-Entdecker-Mikrodienst lokal ist.

3. Verfahren nach Anspruch 1 oder Anspruch 2, wobei das Überwachen (810) des FQDN auf Adressänderungen das kontinuierliche Überwachen des FQDN auf Adressänderungen umfasst, bis es als Reaktion auf eine Nachricht von dem anfordernden Knoten, die Überwachung des FQDN zu beenden, gestoppt wird.

4. Verfahren nach einem der vorhergehenden Ansprüche, wobei der 4G-Dienst-Endpunkt einen Endpunkt umfasst, der einem entwickelten 4G-Paketkern- (4G-Evolved Packet Core, EPC) Netzknoten zugeordnet ist.

5. Verfahren nach Anspruch 4, wobei der 4G-EPC-Netzknoten eines der Folgenden umfasst: ein Serving Gateway, S-GW, einen Home Subscriber Server, HSS, ein Offline-Ladesystem, OFCS, ein Online-Ladesystem, OCS, eine Mobilitäts-Management-Entität, MME, eine Richtlinien- und Gebührenerhebungsregeln-Funktion (Policy and Charging Rules Function, PCRF) und ein Paket-Gateway, P-GW.

6. System zum Auffinden und Verfolgen von Adressen, die 4G-Dienst-Endpunkten zugeordnet sind, wobei das System Folgendes umfasst:
eine Computerplattform (700) mit mindestens einem Prozessor (702); und
einen Domänennamensystem-, DNS-, Entdeckungsmikrodienst (300), der sich auf der Computerplattform (700) getrennt von einem anfordernden Knoten und einem DNS-Server (306) befindet, wobei der anfordernde Knoten einen Dienstkommunikationsproxy, SCP, einen Durchmesser-Relais-Agenten, DRA, oder einen 4G- oder SG-Verbraucher NF umfasst und wobei der DNS-Entdecker-Mikrodienst (300) von dem mindestens einen Prozessor (702) für Folgendes implementiert wird: Empfangen (800) einer ersten DNS-Auflösungs- oder Überwachungsanforderung von dem anfordernden Knoten, Abfragen (802) des DNS-Servers (306) unter Verwendung eines voll qualifizierten Domänennamens, FQDN, eines 4G-Dienst-Endpunkts aus der ersten DNS-Auflösungs- oder Überwachungsanforderung, Empfangen (804) einer ersten Antwort von dem DNS-Server (306), wobei die erste Antwort eine Adresse enthält, die dem 4G-Dienst-Endpunkt zugeordnet ist, der dem FQDN zugeordnet ist, Speichern (806) der Adresse, die dem 4G-Dienst-Endpunkt zugeordnet ist, in einer Datenbank (310), Übermitteln (808) der dem 4G-Dienst-Endpunkt zugeordneten Adresse an den anfordernden Knoten, Überwachen (810) des FQDN auf Änderungen der dem FQDN zugeordneten Adresse, und Benachrichtigen des anfordernden Knotens über die Änderungen der dem FQDN zugeordneten Adresse, wobei der DNS-Entdecker-Mikrodienst (300) einen DNS-Datensatz-Änderungsentdecker (400) zum Durchführen der Überwachung des FQDN enthält, durch:
Erfassen des Ablaufs eines Datensatzes, der die dem 4G-Dienst-Endpunkt zugeordnete Adresse in der Datenbank (310) speichert;
als Reaktion auf das Erfassen des Ablaufs des Datensatzes, Abfragen des DNS-Servers (306) unter Verwendung des FQDN;
Empfangen einer zweiten Antwort von dem DNS-Server (306);
Vergleichen einer Adresse in der zweiten Antwort mit der Adresse, die mit dem 4G-Dienst-Endpunkt zugeordnet ist, der in dem Datensatz in der Datenbank (310) gespeichert ist; und
Bestimmen, dass eine Änderung der Adresse, die dem FQDN zugeordnet ist, in Reaktion darauf aufgetreten ist, dass die Adresse in der zweiten Antwort sich von der Adresse unterscheidet, die dem 4G-Dienst-Endpunkt zugeordnet ist, der in dem Datensatz in der Datenbank (310) gespeichert ist.

7. System nach Anspruch 6, wobei der DNS-Entdecker-Mikrodienst (300) eine repräsentative Zustandstransfer- (Representational State Transfer, REST) Serverschnittstelle (316) zum Empfangen der ersten DNS-Auflösungs- oder Überwachungsanforderung von dem anfordernden Knoten enthält.

8. System nach Anspruch 6 oder Anspruch 7, wobei die Datenbank (310) lokal zu dem DNS-Entdecker-Mikrodienst (300) ist.

9. System nach einem der Ansprüche 6 bis 8, wobei der DNS-Datensatz-Änderungsentdecker (400) so konfiguriert ist, dass er den FQDN kontinuierlich auf Adressänderungen überwacht, bis er als Reaktion auf eine Nachricht vom anfordernden Knoten, die Überwachung des FQDN zu beenden, angehalten wird.

10. System nach einem der Ansprüche 6 bis 9, wobei der 4G-Dienst-Endpunkt einen Endpunkt umfasst, der einem entwickelten 4G-Paketkern-, EPC, Netzknoten zugeordnet ist.

11. System nach Anspruch 10, wobei der 4G-EPC-Netzknoten eines der Folgenden umfasst: ein Serving Gateway, S-GW, einen Home Subscriber Server, HSS, ein Offline-Ladesystem, OFCS, ein Online-Ladesystem, OCS, eine Mobilitäts-Management-Entität, MME, eine Richtlinien- und Gebührenerhebungsregeln-Funktion, PCRF, und ein Paket-Gateway, P-GW.

12. Nicht-flüchtiges computerlesbares Medium, auf dem ausführbare Anweisungen gespeichert sind, die, wenn sie von einem Prozessor eines Computers ausgeführt werden, den Computer so steuern, dass er Schritte ausführt, die Folgendes umfassen:
bei einem Domänennamensystem-, DNS, Entdecker-Mikrodienst (300), der von einem anfordernden Knoten und einem DNS-Server (306) getrennt ist, wobei der anfordernde Knoten einen Dienstkommunikations-Proxy, SCP, einen Durchmesser-Relais-Agenten, DRA, oder eine 4G- oder SG-Verbraucher-NF Folgendes umfasst:
Empfangen (800), von dem anfordernden Knoten, einer ersten Domänennamensystem-, DNS-, Auflösungs- oder Überwachungsanforderung, die einen vollständig qualifizierten Domänennamen, FQDN, eines 4G-Dienst-Endpunkts enthält;
- Abfragen (802) des DNS-Servers (306) unter Verwendung des FQDN des 4G-Dienst-Endpunkts von der ersten DNS-Auflösungs- oder Überwachungsanforderung;
Empfangen (804) einer ersten Antwort von dem DNS-Server, wobei die Antwort eine Adresse enthält, die dem 4G-Dienst-Endpunkt zugeordnet ist,
Speichern (806) der Adresse, die dem 4G-Dienst-Endpunkt zugeordnet ist, in einer Datenbank (310);
Übermitteln (808) der dem 4G-Dienst-Endpunkt zugeordneten Adresse an den anfordernden Knoten,
Überwachen (810) des FQDN auf Änderungen der dem FQDN zugeordneten Adresse, wobei das Überwachen des FQDN Folgendes umfasst:
Erfassen des Ablaufs eines Datensatzes, der die dem 4G-Dienst-Endpunkt zugeordnete Adresse in der Datenbank (310) speichert;
als Reaktion auf das Erfassen des Ablaufs des Datensatzes, Abfragen des DNS-Servers (306) unter Verwendung des FQDN;
Empfangen einer zweiten Antwort von dem DNS-Server (306);
Vergleichen einer Adresse in der zweiten Antwort mit der Adresse, die dem FQDN zugeordnet ist, der in dem Datensatz in der Datenbank (310) gespeichert ist; und
Bestimmen, dass eine Änderung der Adresse, die dem FQDN zugeordnet ist, in Reaktion darauf aufgetreten ist, dass die Adresse in der zweiten Antwort sich von der Adresse unterscheidet, die dem FQDN zugeordnet ist, der in dem Datensatz in der Datenbank (310) gespeichert ist; und
Benachrichtigen (812) des anfordernden Knotens über die Änderungen der dem FQDN zugeordneten Adresse.

## Revendications

1. Procédé servant à découvrir et à suivre des adresses associées à des points d'extrémité de service 4G, le procédé comportant :
au niveau d'un microservice de moyen de découverte DNS (domain name system - système de noms de domaine) (300) séparé d'un noeud demandeur et d'un serveur DNS (306), dans lequel le noeud demandeur comporte un mandataire SCP (service communications proxy - mandataire de communication de service), un agent DRA (Diameter relay agent - agent de relais Diameter), ou une fonction NF (network function - fonction de réseau) de consommateurs 4G ou 5G, les étapes consistant à :
recevoir (800), en provenance du noeud demandeur, une première demande de surveillance ou de résolution DNS comprenant un nom FQDN (fully qualified domain name - nom de domaine complet) d'un point d'extrémité de service 4G ;
interroger (802) le serveur DNS (306) en utilisant le nom FQDN du point d'extrémité de service 4G extrait en provenance de la première demande de surveillance ou de résolution DNS ;
recevoir (804) une première réponse en provenance du serveur DNS, la première réponse comprenant une adresse associée à un point d'extrémité de service 4G associé au nom FQDN ;
stocker (806) l'adresse associée au point d'extrémité de service 4G dans une base de données (310) ;
communiquer (808) l'adresse associée au point d'extrémité de service 4G au noeud demandeur ;
surveiller (810) le nom FQDN à la recherche de changements dans l'adresse associée au nom FQDN, dans lequel l'étape consistant à surveiller le nom FQDN comporte les étapes consistant à :
détecter l'expiration d'un enregistrement stockant l'adresse associée au point d'extrémité de service 4G dans la base de données (310) ;
en réponse à l'étape consistant à détecter l'expiration de l'enregistrement, interroger le serveur DNS (306) en utilisant le nom FQDN ;
recevoir une deuxième réponse en provenance du serveur DNS (306) ;
comparer une adresse dans la deuxième réponse à l'adresse qui est associée au nom FQDN et qui est stockée dans l'enregistrement dans la base de données (310) ; et
déterminer qu'un changement au niveau de l'adresse associée au nom FQDN a eu lieu en réponse à l'adresse dans la deuxième réponse qui est différente de l'adresse qui est associée au nom FQDN et qui est stockée dans l'enregistrement dans la base de données (310) ; et
notifier (812) au noeud demandeur les changements au niveau de l'adresse associée au nom FQDN.

2. Procédé selon la revendication 1, dans lequel l'étape consistant à stocker (806) l'adresse associée au point d'extrémité de service 4G comporte l'étape consistant à stocker l'adresse dans une base de données (310) locale au microservice de moyen de découverte DNS.

3. Procédé selon la revendication 1 ou la revendication 2, dans lequel l'étape consistant à surveiller (810) le nom FQDN à la recherche de changements dans l'adresse comprend l'étape consistant à surveiller en continu le nom FQDN à la recherche de changements dans l'adresse jusqu'à ce que cette étape soit arrêtée en réponse à un message en provenance du noeud demandeur qui demande de cesser toute surveillance du nom FQDN.

4. Procédé selon l'une quelconque des revendications précédentes, dans lequel le point d'extrémité de service 4G comporte un point d'extrémité associé au noeud de réseau EPC (evolved packet core - noyau de paquet évolué) 4G.

5. Procédé selon la revendication 4, dans lequel le noeud de réseau EPC 4G comporte l'un parmi une S-GW (serving gateway - passerelle de services), un serveur HSS (home subscriber server - serveur d'abonnés local), un OFCS (offline charging system - système de charge hors ligne), un OCS (online charging system - système de charge en ligne), un MME (mobility management entity - entité de gestion de la mobilité), une fonction PCRF (policy and charging rules function - fonction de règles de politique et de facturation) et une P-GW (packet gateway - passerelle de paquets).

6. Système servant à découvrir et à suivre des adresses associées à des points d'extrémité de service 4G, le système comportant :
une plateforme informatique (700) comprenant au moins un processeur (702) ; et
un microservice de moyen de découverte DNS (domain name system - système de noms de domaine) (300) se trouvant sur la plateforme informatique (700) séparé d'un noeud demandeur et d'un serveur DNS (306), dans lequel le noeud demandeur comporte un mandataire SCP (service communications proxy - mandataire de communication de service), un agent DRA (Diameter relay agent - agent de relais Diameter), ou une fonction NF (network function-fonction de réseau) de consommateurs 4G ou 5G et dans lequel le microservice de moyen de découverte DNS (300) est mis en oeuvre par ledit au moins un processeur (702) pour recevoir (800) une première demande de surveillance ou de résolution DNS en provenance du noeud demandeur, pour interroger (802) le serveur DNS (306) en utilisant un nom FQDN (fully qualified domain name - nom de domaine complet) d'un point d'extrémité de service 4G en provenance de la première demande de surveillance ou de résolution DNS, pour recevoir (804) une première réponse en provenance du serveur DNS (306), la première réponse comprenant une adresse associée au point d'extrémité de service 4G associé au nom FQDN, pour stocker (806) l'adresse associée au point d'extrémité de service 4G dans une base de données (310), pour communiquer (808) l'adresse associée au point d'extrémité de service 4G au noeud demandeur, pour surveiller (810) le nom FQDN à la recherche de changements dans l'adresse associée au nom FQDN, et pour notifier au noeud demandeur les changements au niveau de l'adresse associée au nom FQDN, dans lequel le microservice de moyen de découverte DNS (300) comprend un moyen de découverte de changements d'enregistrements DNS (400) pour effectuer l'étape consistant à surveiller le nom FQDN par les étapes consistant à :
détecter l'expiration d'un enregistrement stockant l'adresse associée au point d'extrémité de service 4G dans la base de données (310) ;
en réponse à l'étape consistant à détecter l'expiration de l'enregistrement, interroger le serveur DNS (306) en utilisant le nom FQDN ;
recevoir une deuxième réponse en provenance du serveur DNS (306) ;
comparer une adresse dans la deuxième réponse à l'adresse qui est associée au point d'extrémité de service 4G et qui est stockée dans l'enregistrement dans la base de données (310) ; et
déterminer qu'un changement au niveau de l'adresse associée au nom FQDN a eu lieu en réponse à l'adresse dans la deuxième réponse qui est différente de l'adresse qui est associée au point d'extrémité de service 4G et qui est stockée dans l'enregistrement dans la base de données (310).

7. Système selon la revendication 6, dans lequel le microservice de moyen de découverte DNS (300) comprend une interface de serveur REST (representational state transfer - transfert d'état représentationnel) (316) servant à recevoir la première demande de surveillance ou de résolution DNS en provenance du noeud demandeur.

8. Système selon la revendication 6 ou la revendication 7, dans lequel la base de données (310) est locale au microservice de moyen de découverte DNS (300).

9. Système selon l'une quelconque des revendications 6 à 8, dans lequel le moyen de découverte de changements d'enregistrements DNS (400) est configuré pour surveiller en continu le nom FQDN à la recherche de changements dans l'adresse jusqu'à ce que cette étape soit arrêtée en réponse à un message en provenance du noeud demandeur qui demande de cesser toute surveillance du nom FQDN.

10. Système selon l'une quelconque des revendications 6 à 9, dans lequel le point d'extrémité de service 4G comporte un point d'extrémité associé au noeud de réseau EPC (evolved packet core - noyau de paquet évolué) 4G.

11. Système selon la revendication 10, dans lequel le noeud de réseau EPC 4G comporte l'un parmi une S-GW (serving gateway - passerelle de services), un serveur HSS (home subscriber server - serveur d'abonnés local), un OFCS (offline charging system - système de charge hors ligne), un OCS (online charging system - système de charge en ligne), un MME (mobility management entity - entité de gestion de la mobilité), une fonction PCRF (policy and charging rules function - fonction de règles de politique et de facturation) et une P-GW (packet gateway - passerelle de paquets).

12. Support non transitoire lisible par ordinateur ayant, stockées sur celui-ci, des instructions en mesure d'être exécutées qui, quand elles sont exécutées par un processeur d'un ordinateur commandent l'ordinateur pour qu'il effectue :
au niveau d'un microservice de moyen de découverte DNS (domain name system - système de noms de domaine) (300) séparé d'un noeud demandeur et d'un serveur DNS (306), dans lequel le noeud demandeur comporte un mandataire SCP (service communications proxy - mandataire de communication de service), un agent DRA (Diameter relay agent - agent de relais Diameter), ou une fonction NF (network function - fonction de réseau) de consommateurs 4G ou 5G, les étapes consistant à :
recevoir (800), en provenance du noeud demandeur, une première demande de surveillance ou de résolution DNS (domain name system - système de noms de domaine) comprenant un nom FQDN (fully qualified domain name - nom de domaine complet) d'un point d'extrémité de service 4G ;
interroger (802) le serveur DNS (306) en utilisant le nom FQDN du point d'extrémité de service 4G en provenance de la première demande de surveillance ou de résolution DNS ;
recevoir (804) une première réponse en provenance du serveur DNS, la réponse comprenant une adresse associée au point d'extrémité de service 4G ;
stocker (806) l'adresse associée au point d'extrémité de service 4G dans une base de données (310) ;
communiquer (808) l'adresse associée au point d'extrémité de service 4G au noeud demandeur ;
surveiller (810) le nom FQDN à la recherche de changements dans l'adresse associée au nom FQDN, dans lequel l'étape consistant à surveiller le nom FQDN comporte les étapes consistant à :
détecter l'expiration d'un enregistrement stockant l'adresse associée au point d'extrémité de service 4G dans la base de données (310) ;
en réponse à l'étape consistant à détecter l'expiration de l'enregistrement, interroger le serveur DNS (306) en utilisant le nom FQDN ;
recevoir une deuxième réponse en provenance du serveur DNS (306) ;
comparer une adresse dans la deuxième réponse à l'adresse qui est associée au nom FQDN et qui est stockée dans l'enregistrement dans la base de données (310) ; et
déterminer qu'un changement au niveau de l'adresse associée au nom FQDN a eu lieu en réponse à l'adresse dans la deuxième réponse qui est différente de l'adresse qui est associée au nom FQDN et qui est stockée dans l'enregistrement dans la base de données (310) ; et
notifier (812) au noeud demandeur les changements au niveau de l'adresse associée au nom FQDN.
